# EUROPEAN PATENT APPLICATION

(11) **EP 1 806 235 A1**
(43) Date of publication of application: **11.07.2007**
(21) Application number: 05786269.0
(22) Date of filing: 28.07.2005
(51) Int. Cl.: B41M 5/00, G02B 27/22, B41M 7/00

(54) **METHOD AND DEVICE FOR PRODUCING HOLOGRAMS AND/OR OPTICAL EFFECTS ON A LAMINAR MATERIAL**

(30) Priority: 04.08.2004 ES 200401944
(71) Applicant: NEOPACK, SL, 17834 Porqueres (Girona) (ES)
(72) Inventor: DAVILA CASITAS, Juan, E-17834 Porqueres (ES); GRIFOLL CASANOVAS, Juan, E-17834 Porqueres (ES)
(74) Representative: Gislon, Gabriele
(86) International application number: PCT/ES2005/000429
(87) International publication number: WO 2006/027398

(57) **Abstract**

A die (3) provided with an original pattern of a hologram or corresponding to a configuration that can provide an optical effect, is used by a superimposing and pressing on a lacquer layer (1) applied on a laminar substrate (2), and the lacquer layer (1) on said laminar substrate (2) is cured.

The method comprises:
- providing the die (3) as a continuous band on which the mentioned pattern is configured;
- dynamically superimposing said lacquer layer (1) applied to the laminar substrate (2) to said die (3) on a support roller (21), and
- dynamically pressing the lacquer layer (1) applied to the laminar substrate (2) against the die (3) on said support roller (21) by means of a pressure roller (22).

## Description

### Scope of the Invention

The present invention generally relates to a method and apparatus for obtaining holograms and/or optical effects such as metal-coated luster, and more specifically to a method and an apparatus for obtaining holograms or other configurations that are able to generate optical effects on a laminar substrate, particularly in continuous band form.

### Prior State of the Art

The technique of providing light refraction and reflection optical effects on a laminar material is currently known by means of applying a layer of lacquer, varnish, resin or other plastic material, suitably engraved in micro-embossed form to form micro-lenses or holograms on the laminar material. The lacquer layer may possibly be applied on designs or illustrations previously printed on the laminar material which will be seen through the micro-lenses or holograms providing the aforementioned optical effects.

Patent document EP-A-0540455 discloses a process for preparing printed sheets with optical effects comprising first applying a lacquer layer on a sheet with previously printed designs or illustrations, such that the lacquer layer completely covers the sheet or only predetermined areas according to the printed designs. The process then comprises carrying out the engraving by means of heat and pressure, applying a die with an original micro-embossed pattern against the lacquer layer and finally curing the lacquer layer by ultraviolet light radiation. To that end, the lacquer used is a transparent resin that can be polymerized by ultraviolet rays and the engraving is done at the same time that the resin is radiated. The die is arranged on the periphery of an engraving roller and the sheet is a continuous band of laminar material coming from a feed reel such that the process is carried out continuously.

Patent document ES-A-2145658 discloses an installation for obtaining sheets with optical effects characterized in that the application of the resin on the sheet is done by rotogravure, screen printing, flexographic printing, offset printing or other means, and the resin polymerization is done at the same time as the engraving. The resin can be applied either directly on the sheet, before it reaches the engraving roller, or on the engraving roller, before the roller receives the sheet. The engraving roller comprises a base cylinder on the periphery of which there is arranged an emulsion with the engraving information or hardened die. The application, engraving and polymerization means form a compact assembly that can be placed in line with a rotary printing press for applying the optical effects in register with the printed designs or illustrations in the printer and at the speed of the latter.

In the two aforementioned background documents, the die is arranged on the periphery of an engraving cylinder. Obtaining these cylinders is complex and expensive, and the micro-embossments require careful and frequent cleaning maintenance to ensure good engraving conditions. Furthermore, when several machines are arranged to obtain optical effects, each machine requires one of such engraving rollers.

An object of the present invention is to provide a method for obtaining holograms and/or different optical effects, such as luster, from a die in the form of a continuous band of laminar material on which an original mirco-embossed pattern of the hologram is formed or engraved.

Another object of the present invention is to provide an apparatus for obtaining holograms provided with suitable means for carrying out the previous method.

### Description of the Invention

According to a first aspect, the present invention provides a method for obtaining holograms, of the type comprising the steps of superimposing and pressing a die, which incorporates an original micro-embossed pattern of a hologram, or a configuration providing an optical effect to be applied on a transparent lacquer or varnish layer applied to a laminar substrate in continuous band form for the purpose of engraving a duplicate micro-embossed pattern of the hologram or of a configuration that can provide an optical effect in said lacquer layer, and curing the lacquer layer engraved on said laminar substrate. The method of the present invention is characterized in that it comprises providing the die in the form of a continuous band of laminar material on which the mentioned original micro-embossed pattern of the hologram is arranged, and dynamically superimposing the lacquer layer applied to the laminar substrate to said continuous band forming the die on a support roller, and dynamically pressing the lacquer layer applied to the laminar substrate against the die on said support roller by means of a pressure roller.

According to the invention, the laminar material on which the mentioned pattern (hologram or other configuration that can provide an optical effect) is arranged is a continuous band forming the die where the surface tension of said band is less than the surface tension of the laminar substrate.

Advantageously, the continuous band forming the die is unwound from a die feed reel and is led and fed to the transfer device, and is then taken up at the outlet of the transfer device and is led to and wound on a die take-up reel, such that the end reel can be used immediately as an initial reel in the same apparatus or in another one. Similarly, the laminar substrate can be unwound from a laminar substrate feed reel and led and fed to the transfer device, and then the laminar substrate, with the engraved and cured lacquer layer applied thereupon coming from the transfer device and from a curing device, can be taken up so as to be led to and wound onto a laminar substrate take-up reel. As a result, the process can be carried out continuously and at a relatively high speed.

The method of the present invention allows using a printing unit of a flexographic printer as the device for applying the lacquer layer on the laminar material, according to the advance direction of the laminar substrate, which flexographic printer is of the type provided with a central support drum and a plurality of printing units arranged on either side of said central support drum. A plate can be mounted on the periphery of an application roller, or plate holding roller, of the printing unit used as a device for applying the lacquer layer, such plate having a configuration adapted to transfer the lacquer layer only in predetermined areas on the laminar substrate, said areas being predetermined according to the designs or illustrations previously printed on the band of laminar material by the preceding printing units. The application of the lacquer layer is thus done in register with and at the same speed as the previous printing of designs or illustrations on the band of laminar material with a single printer.

A resin that can be polymerized by ultraviolet rays is preferably used for the lacquer layer, and the method comprises radiating the lacquer layer by means of ultraviolet radiation after the lacquer layer has been engraved. When the laminar substrate is substantially transparent or translucent, the radiation can be done through the laminar substrate, possibly on the support roller. However, it is possible to directly radiate the lacquer layer applied to the laminar substrate by means of ultraviolet radiation in a place where the die is separated from the lacquer layer, downstream from the transfer device, and this can be done both when the laminar substrate is substantially opaque and when it is substantially transparent or translucent.

According to another aspect, the present invention provides an apparatus for obtaining holograms or duplicating optical effects such as luster, embossment information, etc., of the type comprising a transfer device for superimposing and pressing a die, which incorporates an original micro-embossed pattern of the hologram, on a transparent varnish or lacquer layer applied to a laminar substrate in continuous band form, for the purpose of engraving a duplicate micro-embossed pattern of the hologram in said lacquer layer, and a curing device for curing the lacquer layer engraved on said laminar substrate. The apparatus of the present invention is characterized in that said die comprises a continuous band of laminar material on which the aforementioned original micro-embossed pattern of the hologram, or an optical effect to be reproduced, for example a metal-coated luster, is holographically engraved or arranged, and in that said transfer device comprises a support roller on which said continuous band forming the die superimposed on the lacquer layer applied to the laminar substrate and a pressure roller arranged to dynamically press the lacquer layer applied to the laminar substrate against the die on said support roller are supported and move together.

The die in continuous band form according to the present invention has the advantage of being able to be obtained in the necessary amounts and in a relatively cost-effective manner by means of any of the processes known in the state of the art using an engraving roller. Once the die is obtained, it can be used many times with minimal maintenance for obtaining a large number of duplicates at a very low cost. The die in continuous band form can be used with different configurations for applying the lacquer layer on predetermined areas of the laminar substrate. Furthermore, when several machines are used, a suitable number of die feed reels obtained from a single engraving roller can be used, which prevents the need of having an expensive engraving roller for each apparatus.

### Brief Explanation of the Drawings

The aforementioned and other advantages and features of the present invention will be better understood from the following detailed description of several embodiments in reference to the attached drawings, in which:
Figure 1 is a schematic diagram showing an apparatus for obtaining holograms and/or other optical effects according to an embodiment of the present invention;
Figure 2 is a schematic diagram showing an apparatus for obtaining holograms according to another embodiment of the present invention; and
Figure 3 is a schematic diagram showing the apparatus of the present invention associated to a flexographic printer.

### Detailed Description of several Embodiments

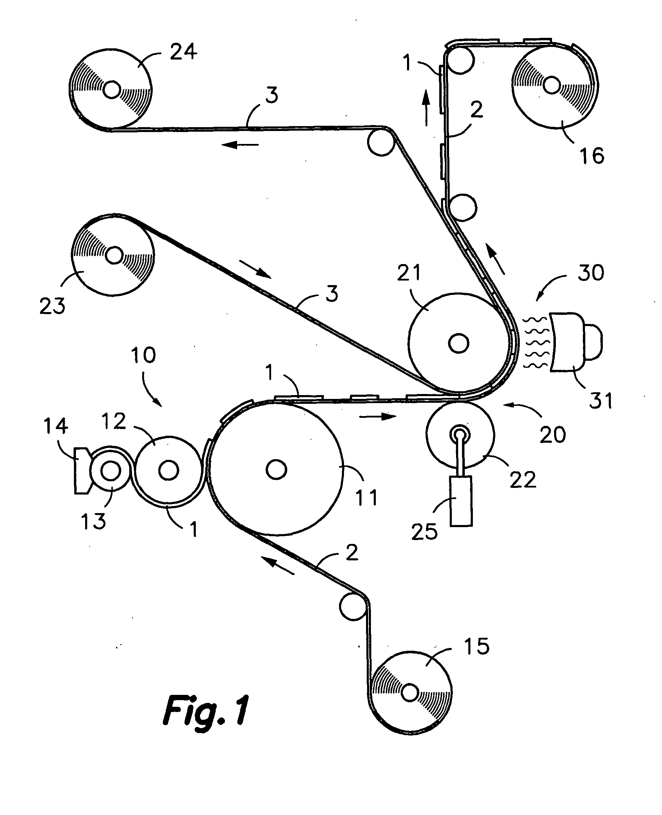

First in reference to Figure 1, an embodiment of the apparatus for obtaining holograms (or other configurations producing optical effects) of the present invention is shown, comprising an application device 10 for applying a transparent varnish or lacquer layer 1 on a laminar substrate 2 in continuous band form, a transfer device 20 for superimposing and pressing a die 3 which incorporates an original micro-embossed pattern of the hologram on said lacquer layer 1 applied to the laminar substrate 2 for the purpose of engraving a duplicate micro-embossed pattern of the hologram on said lacquer layer 1, and a curing device 30 for curing the lacquer layer 1 engraved on said laminar substrate 2.

The aforementioned die 3 is formed by a continuous band of flexible laminar material on which the aforementioned original micro-embossed pattern of a hologram or a configuration that can generate optical effects is holographically engraved or arranged. This die 3 in continuous band form is obtained by any one of the processes known in the art, for example using an engraving roller. The aforementioned transfer device 20 comprises a support roller 21 on which said continuous band forming the die 3 superimposed on the uncured lacquer layer 1 applied to the laminar substrate 2 and a pressure roller 22 arranged to dynamically press the lacquer layer 1 applied to the laminar substrate 2 against the die 3 on said support roller 21 are supported and move together.

According to the invention, the laminar material is a continuous band forming the die 3 and the surface tension of said band is less than the surface tension of the laminar substrate (2).

The apparatus preferably comprises a laminar substrate feed device (not shown) adapted - to unwind, lead and feed the laminar substrate 2 from a laminar substrate feed reel 15 to the application device 10, where the lacquer layer 1 is applied to the laminar substrate 2.

The application device 10 comprises a support drum 11 on which the laminar substrate 2 is supported and moves, and an application unit including a lacquer feed device 14 for applying lacquer to the surface of a daubing roller 13 arranged to daub an application roller 12, which in turn is in rolling contact with the laminar substrate 2 on said support drum 11 so as to transfer the lacquer from said daubing roller 13 to the substrate 2. A plate with a configuration that is adapted to transfer the lacquer layer 1 only in predetermined areas on the laminar substrate 2 is possibly assembled on the periphery of said application roller 12, although there is no technical limitation for the lacquer layer to be applied continuously. The laminar substrate 2 usually has designs or illustrations printed on the same side that is intended to receive the transparent lacquer layer 1, and the aforementioned predetermined areas of the laminar substrate 2 on which the lacquer layer 1 is applied are arranged in relation to said printed designs or illustrations.

The laminar substrate 2 with the lacquer layer 1 applied thereto is led from the outlet of the application device 10 to the inlet of the transfer device 20. The continuous band forming the die 3 is unwound from a die feed reel 23 by a die feed device (not shown) and led and fed to the inlet of the transfer device 20, where it is superimposed on the laminar substrate 2 having the lacquer layer 1. The side of the die 3 having the original micro-embossment of the hologram is obviously superimposed in contact with the side of the laminar substrate 2 on which the uncured lacquer layer 1 is applied.

In the transfer device 20, the die 3 is dynamically supported on the support roller 21, the lacquer layer 1 applied to the laminar substrate 2 is supported on the die 3, and the pressure roller 22 exerts pressure on the laminar substrate 2 against the support roller 21 for the purpose of pressing the lacquer layer 1 against the die 3. The pressure roller 22 is associated to pushing means 25 adapted to apply a pushing force on the pressure roller 22 in the direction of the support roller 21. The aforementioned pushing means can be formed by a pair of nut and screw mechanisms arranged at the ends of a support for the pressure roller 22 and actuated by one or more electric motors. Adjustment means associated to the pushing means 25 allow adjusting said pushing force applied to the pressure roller 22.

In this embodiment shown in Figure 1, the laminar substrate 2 is substantially transparent or translucent, and the aforementioned curing device 30 comprises at least one ultraviolet radiation lamp 31 arranged to radiate the lacquer layer 1 through the laminar substrate 2. In Figure 1, said ultraviolet radiation lamp 31 is arranged to radiate the lacquer layer 1 through-the laminar substrate 2 on the support roller 21 of the transfer device 20, although it could be arranged at any other point of the circuit of the laminar substrate 2 downstream from the transfer device 20. Several ultraviolet radiation lamps could also be arranged opposite to the support roller 21 and/or at different points downstream from the transfer device 20 to reinforce the curing action.

At the outlet of the transfer device 20, the die 3 is separated from the lacquer layer 1 applied, engraved and cured on the laminar substrate 2. A die take-up device (not shown) is adapted to take up, lead and wind the continuous band forming the die 3 to a die take-up reel 24, and a laminar substrate take-up device (not shown) is adapted to take up, lead and wind the laminar substrate 2, with the engraved and cured lacquer layer 1 applied thereto, to a laminar substrate take-up reel 16. Once the die take-up reel 24 is full, it can immediately be used as the die feed reel 23 in the same apparatus or in another one, and once the laminar substrate take-up reel 16 is fill, it can be, for example, removed and stored or transferred, for example, to a cutting machine (not shown).

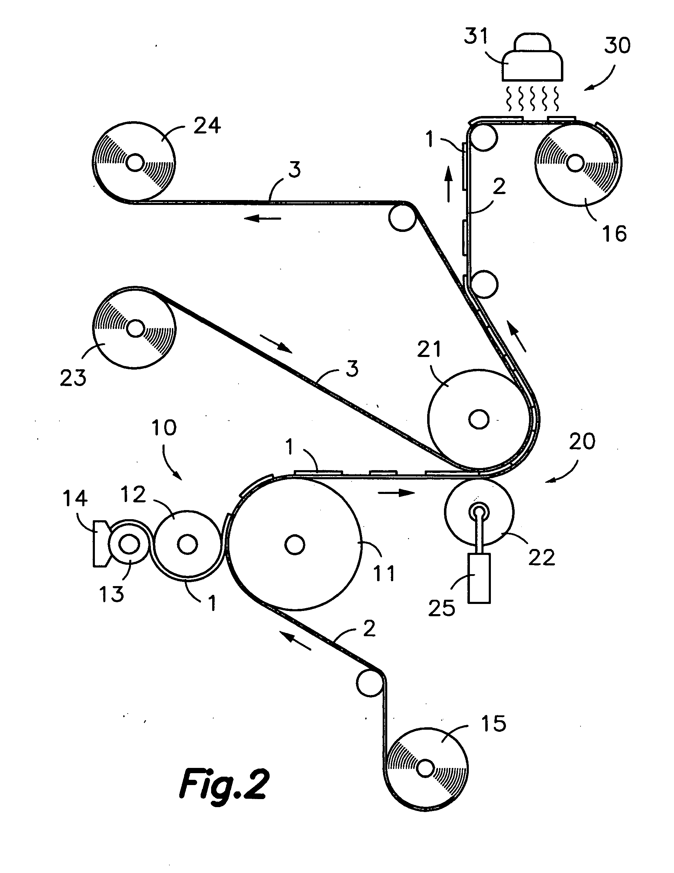

With reference to Figure 2, the latter shows another embodiment of the apparatus of the present invention which is completely identical to the embodiment described above in relation to Figure 1 except that the laminar substrate 2 is substantially opaque. For this reason, the curing device 30 comprises at least an ultraviolet radiation lamp 31 arranged to directly radiate the lacquer layer 1 applied to the laminar substrate 2 where the die 3 is separated from the lacquer layer 1, downstream from the transfer device 20. This arrangement of the ultraviolet radiation lamp 31 is obviously also useful for a substantially transparent or translucent laminar substrate 2, therefore, when a substantially transparent or translucent laminar substrate 2 is used, several ultraviolet radiation lamps 31 can be used by combining the arrangements shown in Figure 1 and Figure 2. Given that the rest of the apparatus of Figure 2 is identical to that shown in Figure 1, its description is omitted and the description made in relation to Figure 1 above is referred to.

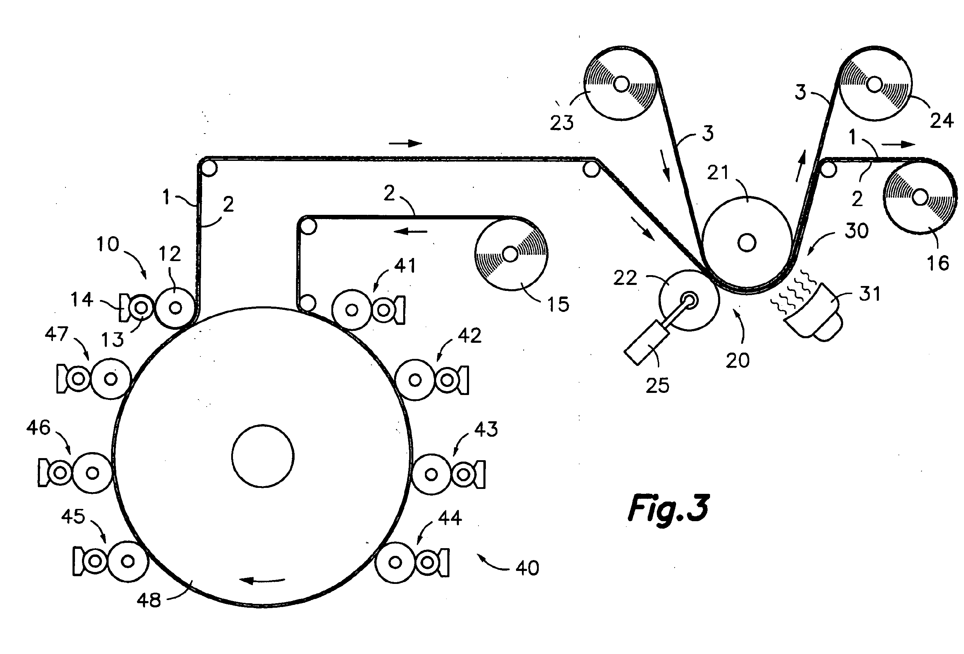

Figure 3 shows the apparatus for obtaining holograms of Figure 1 associated to a flexographic printer 40 provided with a central support drum 48 and a plurality of printing units 41, 42, 43, 44, 45, 46, 47 arranged on either side of said central support drum 48. Each of said printing units 41, 42, 43, 44, 45, 46, 47 comprises as is usual a plate holding roller, an ink roller and an ink feed device provided with scrapers. The laminar substrate 2 is led from the laminar substrate feed reel 15 to the central support drum 48 of the flexographic printer and is dynamically supported along a significant part of its circumference, whereas the printing units 41, 42, 43, 44, 45, 46, 47 print designs on the same side of the laminar substrate 2 intended to subsequently receive the transparent lacquer layer 1. A last printing unit of the flexographic printer, according to the advance direction of the laminar substrate 2, acts as the application device 10. Thus, in this last printing unit, the plate holding roller acts as the application roller 12, the ink roller acts as the daubing roller 13, and the ink supplying device provided with scrapers acts as the lacquer feed device 14 for applying lacquer in predetermined areas on the laminar substrate 2 in register with the designs or illustrations previously printed on the laminar substrate 2 by the printing units 41, 42, 43, 44, 45, 46, 47.

The laminar substrate 2 with the lacquer layer 1 applied thereon is led from the outlet of the application device 10 to the transfer device 20, where it is superimposed on the die 3 coming from the die feed reel 23 in a similar manner to that described in relation to Figure 1. Then, the pressure roller 22 presses the lacquer layer 1 applied to the laminar substrate 2 against the die 3 on the support roller 21 in accordance with a pushing force exerted by the pushing means 25, and an ultraviolet radiation lamp 31 of the curing device 30 radiates the lacquer layer 1, once engraved, through the laminar substrate 2 while the lacquer layer 1 is still in contact with the die 3. Obviously, as mentioned above, the radiation of the lacquer layer 1 through the laminar substrate 2 is only possible provided that the laminar substrate 2 is substantially transparent or translucent. In the event that the laminar substrate 2 is substantially opaque, the ultraviolet radiation lamp 31 will be located where the die 3 is separated from the lacquer layer 1 downstream from the transfer device 20 so as to directly radiate the engraved lacquer layer I applied to the laminar substrate 2 in a similar manner to that shown in Figure 2.

Once the continuous band forming the die 3 is separated from the engraved and cured lacquer layer 1 applied to the laminar substrate 2, it is led to a take-up device adapted to wind it on the die take-up reel 24, whereas the laminar substrate 2 with the engraved and cured lacquer layer I applied thereto is led to a take-up device adapted to wind it on the laminar substrate take-up device 16.

This arrangement of the apparatus for obtaining holograms and/or other optical effects according to the present invention has several advantages over other devices of the state of the art. Firstly, it allows applying a hologram originally formed as a micro-embossment on a die in the form of a band of flexible laminar material and thus obtaining a micro-embossed copy on a band of flexible laminar substrate. The die in continuous band form has the additional advantage of having an inexpensive manufacture and maintenance compared to dies in engraving roller form of the state of the art. The apparatus of the present invention further allows, in association with a conventional flexographic printer, applying the original hologram in register with designs and illustrations previously printed on the laminar substrate intended to receive the duplicate of the hologram. On the other hand, the printing of designs and illustrations and the duplicate of the hologram is carried out in a single operation and at the same speed. The apparatus can further be easily adapted to work with a substantially transparent or translucent laminar substrate, with a substantially opaque laminar substrate, or with either one indistinctly.

Finally, the method for obtaining holograms according to the present invention is also described below in reference to Figure 3. The method comprises, as is conventional, the steps of superimposing and pressing a die 3, which has an original micro-embossed pattern of a hologram, on a transparent lacquer or varnish layer 1 applied to a laminar substrate 2 in a continuous band form for the purpose of engraving a duplicate micro-embossed pattern of the hologram on said lacquer layer 1, and then curing the lacquer layer 1 engraved on said laminar substrate 2 by means of a curing device 30. The method of the present invention specifically comprises providing the die 3 in the form of a continuous band of laminar material on which the aforementioned original micro-embossed pattern of the hologram is arranged, and dynamically superimposing the lacquer layer 1 applied to the laminar substrate 2 on said continuous band forming the die 3 on a support roller 21, and dynamically pressing the lacquer layer 1 applied to the laminar substrate 2 against the die 3 on said support roller 21 by means of a pressure roller 22. The pressing step includes adjusting by adjustment means a pushing force applied by pushing means 25 on the pressure roller 22 in the direction of the support roller 21 with the placement of the die and the lacquer layer applied to the laminar substrate 2 between both.

It is characteristic of the method according to the invention that the bands of the substrate (2) and of the die (3) are superimposed on said support roller (21) along an arc covering at least 15 degrees and generally 70 degrees.

The method of the present invention also comprises unwinding the continuous band forming the die 3 from a die feed reel 23 and leading and feeding it to the transfer device 20, and taking up the continuous band forming the die 3 coming from the transfer device 20 and leading and winding it to a die take-up reel 24. In a similar manner, the method comprises unwinding the laminar substrate 2 from a laminar substrate feed reel 15 and leading and feeding it to the application device 10, and taking up the laminar substrate 2, with the engraved and cured lacquer layer 1 applied thereon, coming from the transfer device 20 and from the curing device 30, and leading it to and winding it on a laminar substrate take-up device 16.

According to an embodiment, the method comprises radiating the lacquer layer 1 through the laminar substrate 2 by means of an ultraviolet radiation lamp 31 in the event that the laminar substrate 2 is substantially transparent or translucent, which can optionally be carried out through the laminar substrate 2 when the latter is on the support roller 21 of the transfer device 20. According to another embodiment, the method comprises directly radiating the lacquer layer 1 applied to the laminar substrate 2 by means of an ultraviolet radiation lamp 31 where the die 3 is separated from the lacquer layer 1 downstream from the transfer device 20 in the event that the laminar substrate 2 is substantially opaque, although there is no technical limitation for it to be carried out with a substantially transparent or translucent laminar substrate 2.

The method of the present invention comprises applying the lacquer layer 1 on the laminar substrate 2 either continuously or only in predetermined areas of the laminar substrate 2, generally in relation to designs or illustrations previously printed on the laminar substrate 2. The application of the lacquer layer 1 on the laminar substrate 2 preferably comprises supporting and moving the laminar substrate 2 on a support drum 11, and applying lacquer, by means of a lacquer feed device 14, to the surface of a daubing roller 13 arranged to daub an application roller 12, which is in rolling contact with the laminar substrate 2 on said support drum 11, and transferring the lacquer from said daubing roller 13 to the substrate 2. The method preferably comprises assembling a plate in the periphery of said application roller 12, which plate has a configuration adapted to transfer the lacquer layer 1 only in said predetermined areas on the laminar substrate 2, and printing designs on the same side of the laminar substrate 2 intended to receive the transparent lacquer layer 1 before applying the lacquer layer 1.

The method according to the present invention also comprises using a last printing unit of a flexographic printer 40, according to the advance direction of the laminar substrate 2, as the application device 10, which flexographic printer is provided with a central support drum 48 and a plurality of printing units 41, 42, 43, 44, 45, 46, 47 arranged on either side of said central support drum 48.

A person skilled in the art will be able to introduce several modifications and variations in the described and illustrated embodiments without departing from the scope of the present invention as it is defined in the attached claims.

## Claims

1. A method for obtaining holograms and/or optical effects on a laminar material, said method comprising the steps of superimposing and pressing a die (3) provided with an original micro-embossed pattern of a hologram, or corresponding to a configuration that can provide an optical effect, on a lacquer or varnish layer (1) applied on a laminar substrate (2) and curing the lacquer layer (1) on said laminar substrate (2), **characterized in that** it comprises:
- providing the mentioned die (3) in the form of a laminar material on which the aforementioned pattern is configured;
- dynamically superimposing said lacquer layer (1) applied to the laminar substrate (2) to said die (3) on a support roller (21), and
- dynamically pressing the lacquer layer (1) applied to the laminar substrate (2) against the die (3) on said support roller (21) by means of a pressure roller (22).

2. A method according to claim 1, **characterized in that** said laminar material is a continuous band forming the die (3).

3. A method according to claim 1, **characterized in that** said laminar material is a continuous band forming the die (3) and **in that** the surface tension of said band is less than the surface tension of the laminar substrate (2).

4. A method according to claim 2, **characterized in that** said laminar substrate (2) is a continuous band and **in that** said bands of the substrate (2) and of the die (3) are superimposed on said support roller (21) along an arc.

5. A method according to claim 4, **characterized in that** said arc covers at least 15 5 degrees.

6. A method according to claim 2, **characterized in that** it comprises unwinding the continuous band forming the die (3) from a die feed reel (23) and leading and feeding it to the transfer device (20), and taking up the continuous band forming the die (3) coming from the transfer device (20) and leading it to and winding it on a die take-up reel (24).

7. A method according to claim 2, **characterized in that** it comprises unwinding the laminar substrate (2) from a laminar substrate feed reel (15) and leading and feeding it to the application device (10), and taking up the laminar substrate (2), with the engraved and cured lacquer layer (1) applied thereon, coming from the transfer device (20) and from a curing device (30), and leading it to and winding it on a laminar substrate take-up reel (16).

8. A method according to claim 2, **characterized in that** said curing comprises radiating the lacquer layer (1) through the laminar substrate (2) by means of an ultraviolet radiation lamp (31) in the event that the laminar substrate (2) is transparent or translucent.

9. A method according to claim 6, **characterized in that** it comprises radiating the lacquer layer (1) through the laminar substrate (2) on the support roller (21) of the transfer device (20).

10. A method according to claim 1, **characterized in that** it comprises directly radiating the lacquer layer (1) applied to the laminar substrate (2) by means of an ultraviolet radiation lamp (31) where the die (3) is separated from the lacquer layer (1) downstream from the transfer device (20) in the event that the laminar substrate (2) is substantially opaque, transparent or translucent.

11. A method according to claim 2, **characterized in that** the laminar substrate (2) comprises separate sheets which are introduced one by one so as to come into contact with the die (3).

12. A method according to any one of claims 1 to 8, **characterized in that** it comprises applying the lacquer layer (1) continuously or in predetermined areas on the laminar substrate (2).

13. A method according to claim 8, **characterized in that** the application of the lacquer layer (1) on the laminar substrate (2) comprises supporting and moving the laminar substrate (2) on a support drum (11), and applying lacquer, by means of a lacquer feed device (14), to the surface of a daubing roller (13) arranged to daub an application roller (12), which is in rolling contact with the laminar substrate (2) on said support drum (11), and transferring the lacquer from said daubing roller (13) to the substrate (2).

14. A method according to claim 9, **characterized in that** said application roller (12) incorporates configurations adapted to transfer the lacquer layer (1) in said predetermined areas on the laminar substrate (2).

15. A method according to claim 14, **characterized in that** it comprises printing designs on the same side of the laminar substrate (2) intended to receive the transparent lacquer layer (1).

16. A method according to claim 2, **characterized in that** it comprises using a printing unit of a flexographic printer (40), according to the advance direction of the laminar substrate (2), as the application device (10), which flexographic printer is provided with a central support drum (48) and a plurality of printing units (41, 42, 43, 44, 45, 46, 47) arranged on either side of said central support drum (48).

17. A method according to claim 1, **characterized in that** it comprises adjusting by adjustment means a pushing force applied by pushing means (25) on the pressure roller (22) in the direction of the support roller (21) with the placement of the die and the lacquer layer applied to the laminar substrate (2).

18. An apparatus for obtaining holograms and/or optical effects on a laminar material, of the type comprising a transfer device (20) for superimposing and pressing a die (3), with an original micro-embossed pattern of a hologram or with a configuration that can provide an optical effect on a lacquer or varnish layer (1) applied to a laminar substrate (2), for the purpose of engraving said pattern on said lacquer layer (1), and a curing device (30) for curing the lacquer layer (1) engraved on said laminar substrate (2), **characterized in that** said die (3) comprises a continuous band of laminar material on which the aforementioned original micro-embossed pattern of the hologram or a configuration that can provide an optical effect is holographically engraved or arranged, and **in that** said transfer device (20) comprises a support roller (21) on which said continuous band forming the die (3) superimposed on the lacquer layer (1) applied to the laminar substrate (2), and a pressure roller (22) arranged to dynamically press the lacquer layer (1) applied to the laminar substrate (2) against the die (3) on said support roller (21) are supported and move together.

19. An apparatus according to claim 18, **characterized in that** it comprises a die feed device adapted to unwind, lead and feed the continuous band forming the die (3) from a die feed reel (23) to the transfer device (20), and a die take-up device adapted to take up, lead and wind the continuous band forming the die (3) from the transfer device (20) to a die take-up reel (24).

20. An apparatus according to claim 19, **characterized in that** it comprises a laminar substrate feed device adapted to unwind, lead and feed the laminar substrate (2) from a laminar substrate feed reel (15) to the application device (10), and a laminar substrate take-up device adapted to take up, lead and wind the laminar substrate (2), with the engraved and cured lacquer layer (1) applied thereto, from the transfer device (20) and the curing device (30) to a laminar substrate take-up reel (16).

21. An apparatus according to claim 18, **characterized in that** the laminar substrate (2) is substantially transparent or translucent, and **in that** said curing device (30) comprises at least one ultraviolet radiation lamp (31) arranged to radiate the lacquer layer (1) through the laminar substrate (2).

22. An apparatus according to claim 21, **characterized in that** said ultraviolet radiation lamp (31) is arranged to radiate the lacquer layer (1) through the laminar substrate (2) on the support roller (21) of the transfer device (20).

23. An apparatus according to claim 18, **characterized in that** the laminar substrate (2) is substantially opaque or substantially transparent or translucent, and **in that** said curing device (30) comprises at least one ultraviolet radiation lamp (31) arranged to directly radiate the lacquer layer (1) applied to the laminar substrate (2) where the die (3) is separated from the lacquer layer (1) downstream from the transfer device (20).

24. An apparatus according to any one of claims 18 to 21, **characterized in that** it comprises an application device (10) for applying the lacquer layer (1) continuously or in predetermined areas on the laminar substrate (2).

25. An apparatus according to claim 24, **characterized in that** said application device (10) comprises a support drum (11) on which the laminar substrate (2) is supported and moves, and an application group including a lacquer feed device (14) for applying lacquer to the surface of a daubing roller (13) arranged to daub an application roller (12) which is in rolling contact with the laminar substrate (2) on said support drum (11) so as to transfer the lacquer from said daubing roller (13) to the substrate (2).

26. An apparatus according to claim 25, **characterized in that** a plate is assembled on the periphery of said application roller (12), which plate has a configuration adapted to transfer the lacquer layer (1) in said predetermined areas on the laminar substrate (2).

27. An apparatus according to claim 26, **characterized in that** said laminar substrate (2) has designs printed on the same side intended to receive the transparent lacquer layer (1).

28. An apparatus according to claim 27, **characterized in that** the application device (10) is a last printing unit of a flexographic printer (40), according to the advance direction of the laminar substrate (2), said flexographic printer being provided with a central support drum (48) and a plurality of printing units (41, 42, 43, 44, 45, 46, 47) arranged on either side of said central support drum (48).

29. An apparatus according to claim 18, **characterized in that** said pressure roller (22) is associated to pushing means (25) adapted to apply a pushing force to the pressure roller (22) in a direction towards the support roller (21) with the interposition of the die and the lacquer layer applied to the laminar substrate (2), adjustment means being incorporated to adjust said pushing force applied by said pushing means (25) to the pressure roller (22).
